# EUROPEAN PATENT APPLICATION

(11) **EP 2 575 287 A1**
(43) Date of publication of application: **03.04.2013**
(21) Application number: 11306240.0
(22) Date of filing: 28.09.2011
(51) Int. Cl.: H04L 9/08, H04L 9/14, H04L 9/32, G06F 21/00

(54) **Method for publishing content over a communication network**

(71) Applicant: Alcatel Lucent, 75007 Paris (FR)
(72) Inventor: Auer, Sebastian, 70435 Stuttgart (DE); Kamga, Guy-Bertrand, 91620 Nozay (FR); Ghorbel, Mahmoud, 91620 Nozay (FR); Betge-Brezetz, Stéphane, 91620 Nozay (FR); Dupont, Marie-Pascale, 91620 Nozay (FR); Aghasaryan, Armen, 91620 Nozay (FR); Piekarec, Sophie, 91620 Nozay (FR)
(74) Representative: Demulsant, Xavier

(57) **Abstract**

A method for publishing data to authorized recipients of a communication network, the method comprising:
- selecting the content (1) to be published;
- selecting a privacy policy (2) for the content (1) to be published;
- optionally signing the content (1) with the user's private key PrK_{A}
- randomly generating a first symmetric key Ksᵢ^{Content} for the content (1)
- encrypting the content (1) with this first symmetric key Ksᵢ^{Content} and encrypting this first secret key with the recipient's key.
- optionally signing the privacy policy (2) with the user's private key PrK_{A}
- randomly generating a second symmetric key Ksᵢ^{Policy} for the privacy policy (2)
- encrypting the privacy policy (2) with this second symmetric key Ksᵢ^{Policy} and encrypting this second secret key with the recipient's key.

## Description

### FIELD OF THE INVENTION

The invention generally relates to control the privacy of user sensible data by using cryptography mechanisms.

Cryptography is the study of sending messages in a secret form so that only those authorized to receive the message be able to read it. Cryptography may be used for any form of communication, but for the purposes of this application, electronic cryptography will be discussed. For electronic communication, a message is transformed into a secret form using a cryptographic key and then may be transformed back into its original or clear form with a cryptographic key.

Encryption is the process of converting a message (or plaintext) into an 'unintelligible' form (called ciphertext) and decryption is the reverse process. The ciphertext is transmitted by the sender to the intended recipient of the plaintext, across an insecure communication channel. The algorithm used for performing encryption and decryption is called the cipher.

### BACKGROUND OF THE INVENTION

A number of cryptographic techniques are available for use in encrypting data.

In symmetric cryptography, encryption and decryption are performed with the same key. Symmetric cryptography is sometimes also referred to as secret cryptography, because the key cannot be disclosed for the data to remain secure.

Triple DES cryptography is an example of symmetric cryptography. The 3DES algorithm applies DES *(Data Encryption Standard)* to each data block three times with different keys. Let E and D represent DES encryption and decryption, respectively. 3DES encryption is defined as *C=Ek3 (Dk2* (*Ek*1 (M))) where M is the plain text, C is the cipher text, and *k*1*, k2, k3* are three DES keys. Thus, the key length of 3DES is in effect 168 bits long if *k*1, k2 and k3 are independent. It is 112 bits long if two of *k*1, k2 and k3 are equal.

AES *(Advanced Encryption Standard)* is another example of symmetric algorithm. Since 2001, when the Advanced Encryption Standard (AES) was approved by the National Institute of Standards and Technology (NIST), the AES has been one of the most commonly used cryptographic algorithms. Various hardware implementations of the AES algorithm were proposed; some of them were designed for ASIC and others exploit specific features of FPGA devices. The most common are 128-bit implementations.

Symmetric-key systems require that the symmetric key be exchanged between the parties involved in a secure manner. Keeping an algorithm secret, however, may be risky. It is possible that the secret algorithm is reverse engineered later and found to be insecure.

Asymmetric cryptography uses two keys: an encryption and a decryption key, where the encryption key is derived from the decryption key using a one way function. In asymmetric cryptography, the encryption, (also referred to as the public key) can be disclosed since it can only encrypt and not decrypt data. The decryption key, also referred to as the private key, cannot be disclosed for the data to remain secure.

### RSA (Rivest Shmair Adleman) and ECC (Elliptic Curve Cryptography) are examples of asymmetric cryptography

IBE (*Identity-Based Encryption)* schemes have also been proposed. Such schemes may use public parameters to encrypt data. These schemes are said to be "identity based," because user-specific identity information such as a particular user's email address is used as one of the inputs to the encryption algorithm. Each user has a unique private key based on the user's identity for decrypting encrypted data. With this type of scheme, a single set of public parameters (used during the encryption and decryption processes) may be shared by many users. In IBC, arbitrary identifying strings such as e-mail addresses or IP addresses can be used to form public keys, with the corresponding private keys being created by a Trusted Authority (TA) who is in possession of a system-wide master secret. Then a party Alice who wishes, for example, to encrypt to a party Bob need only know Bob's identifier and the system-wide public parameters. Bob need not even possess the corresponding private key at this point and can obtain it by authenticating himself to the TA after receiving an encrypted message.

US 2005/0152542 describes a system and method for public key encryption for groups, the system comprising a user and a group wherein the group is comprised of a group leader and a group of M members where M is equal to or greater than one. The group leader generates a group public key and a group leader "master" private key. The group leader creates a personalized or watermarked decryption key, also referred to as an individual private key, for each group member. The individual private key uniquely identifies each group member. The group leader distributes the individual private keys to each of the group members. Each group member receives from a user a message encrypted using the group public key. Each of the group members uses its individual private key to decrypt the encrypted message sent by the user to the group.

The present inventors have presented a method for protecting data sharing with Privacy Data Envelope (PDE) *"*Private Data Envelope: concept and implementation, 9th Annual International Conference on Privacy, Security and Trust, 2011*",* this method using symmetric encryption. In other words, all PDE plug-ins share the unique secret needed for encryption and decryption, this being possible weakness as regards cryptanalysis.

Microsoft has developed a solution called IRM: *Information Rights Management* (http://office.microsoft.com/en-us/outlook-help/help-protect-confidential-information-in-e-mail-using-irm-HA001180136.aspx) which helps to prevent the recipient of any message you send from executing tasks as forwarding, copying or printing the message. The recipient of the message can view the message, but the features for accomplishing these other tasks are not available. This solution is not flexible as all recipients have the same rights (only read, but not forward, copy and print).

The European project PrimeLife: *Privacy and Identity Management in Europe for Life* (http://www.primelife.eu/images/stories/primer/scramble-plb.pdf) has developed a tool called "Scramble!" that allows people to share data in social network sites such as Facebook, MySpace, Hi5, in a secure way, by using hybrid encryption, combining symmetric and asymmetric encryption. However, this tool has some limitations. It allows a data owner to only control who can access his data through encryption. Thus, an authorized user can do anything he wants after getting access to the data. The data owner needs to know in advance all users to whom he wants to give access to his data. Sometimes, it is not possible or easy to identify each single person of the intended audience (e.g. friends of friends, any person aged at least 18 years). This tool limits the propagation of data as no one can forward a piece of data to somebody else. Only the data owner can give access authorization to a piece of data.

Another known system is uProtect.it (https://uprotect.it/index) that allows Facebook users to choose who and when their posts can be viewed. This solution has the same limitations as the PrimeLife solution (scramble!) and moreover, it is limited to Facebook.

### SUMMARY OF THE INVENTION

One object of the present invention is to enhance the way to secure Personal Data Envelope (PDE) sent to one or several recipients. The PDE is a structure comprising both a sensible content that a user would like to publish and the related privacy policy of this user regarding the protection of this particular content.

Another object of the invention is to allow message sender to grant different rights to different recipients (e.g. depending on their role, their relationship with the message sender, etc.) for the same message.

Another object of the invention is to provide a method and a system allowing the data owner to limit what actions (e.g. copy, print, etc.) each authorized user can do through the privacy policy associated with the data.

Another object of the invention is to provide a method and a system dealing with dynamic or implicit intended audience for a piece of data.

A further object of the invention is to provide a method and a system allowing a data owner to delegate a right to anybody to propagate his data in a secure way, through associated privacy policy.

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

In accordance with the present invention a method is provided for publishing data to authorized recipients of a communication network, the method comprising: selecting the content to be published; selecting a privacy policy for the content to be published; optionally signing the content with a user's private key PrK_{A}; randomly generating a first symmetric key Ksᵢ^{Content} for the content; encrypting the content with this first symmetric key Ksᵢ^{Content} and encrypting this first secret key with the recipient's key; optionally signing the privacy policy with the user's private key PrK_{A}; randomly generating a second symmetric key Ksᵢ^{Policy} for the privacy policy; encrypting the privacy policy with this second symmetric key Ksᵢ^{Policy} and encrypting this second secret key with the recipient's key.

Various contents can be considered (for example a post in a social network website, a document, an image, a personal video). Advantageously, when the authorized recipients are named one by one, the encryption of the first secret key Ksᵢ^{Content} and the second secret key Ksᵢ^{Policy} are made using a public key. The first secret key Ksᵢ^{Content} is encrypted using the public key of each authorized recipient PuK_{recipient} cited in the privacy policy. The second secret key KSᵢ^{Policy} is encrypted using the public key of each authorized recipient PuK_{recipient} cited in the privacy policy.

Advantageously, when the authorized recipients are defined by predefined group G and/or implicit recipient description, the first symmetric key Ksᵢ^{Content} is encrypted using a group key Ks_{G} shared by all group members after initial group key generation and sharing. The second symmetric key Ksᵢ^{Policy} is encrypted using a group key Ks_{G} shared by all group members after initial group key generation and sharing.

In accordance with the present invention, when the authorized recipients are named one by one, a Secure Personal Data Envelope SPDE is published, said SPDE comprising the content signed and encrypted with the symmetric key Ksᵢ^{Content} (generated randomly for this SPDE), the list of Ksᵢ^{Content} encrypted separately with all recipient public key, the content privacy policy signed and encrypted with Ksᵢ^{Policy} (generated randomly for this SPDE), the list of Ksᵢ^{Policy} encrypted separately with all recipients public key. Signing the content and also the policy is optional.

In accordance with the present invention, when the authorized recipients are defined by predefined group G and/or implicit recipient description, a Secure Personal Data Envelope SPDE is published, said SPDE comprising the content signed with the user's private key and encrypted with the symmetric key Ksᵢ^{Content}, the Ksᵢ^{Content} encrypted with K_{G}; the content privacy policy signed with the user's private key and encrypted with Ksᵢ^{Policy} (generated randomly for this SPDE), the Ksᵢ^{Policy} encrypted with Ks_{G} if it is about a group recipient. Moreover, if a member of this group G wants to transfer this SPDE to a user C outside of G and if the policy associated to this content authorizes this transfer; the SPDE will be extended to also comprise the necessary two secrets (i.e., PuK_{c} (Ksᵢ^{Content}), and PuK_{c} (Ksᵢ^{Policy})) for the user C to be able to also handle this SPDE.

In accordance with present invention, a computer program implemented on a processing unit of a computer is provided, said program including code sections for performing the following instructions: selecting the content to be published; selecting a privacy policy for the content to be published; optionaly signing the content with the user's private key PrK_{A} ; encrypting the content with a first symmetric key Ksᵢ^{Content} (generated randomly) and encrypting this symmetric key with the public key of the recipient PuK_{Recipient;} optionaly signing the privacy policy with the user's private key PrK_{A}; encrypting the privacy policy with a second symmetric key Ksᵢ^{Policy} (generated randomly) and encrypting this symmetric key with the public key of the recipient PuK_{Recipient}.

Further features of the invention, its nature and various advantages will be more apparent from the accompanying drawings and the following detailed description of the preferred embodiments.

### BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawings in which:
FIG.1 is a schematic diagram representing sending a secure personal data envelope from one user A to another user B;
FIG.2 is a schematic diagram representing sending an upgrade secure personal data envelope from the user B to a user C;
FIG.3 is a schematic diagram representing sending a secure personal data envelope by group publication to a user D, user D being member of the group;
FIG.4 is a schematic diagram representing sending an upgrade secure personal data envelope from the user D to another user E, user E not being member of the group but being authorized to access the content according to the associated privacy policy;

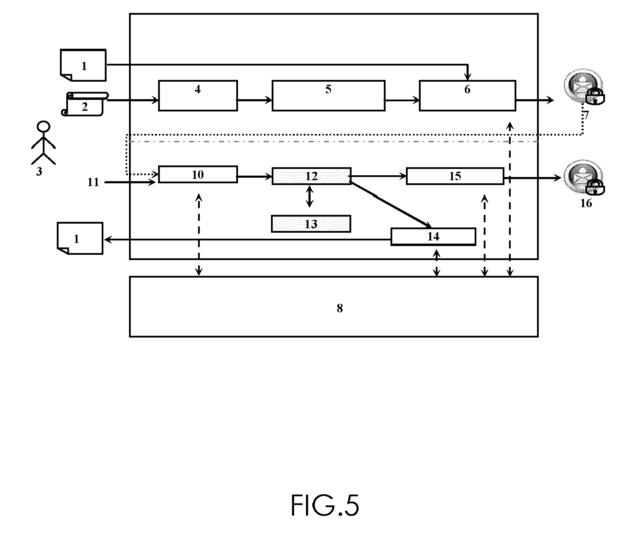

FIG. 5 is a schematic diagram representing secure personal data envelope functional modules.

### DETAILED DESCRIPTION OF ILLUSTRATIVE EMBODIMENTS

After selecting the content 1 to be published and the related privacy policy 2 by the user 3, a specific process associate the privacy policy 2 to the content 1. A first module 4 named PPAM *(Privacy Policy Analyzer Module)* analyzes the privacy policies 2 defined by the user 3 in order to determine some specific properties useful to determine the association strategy.

One example of specific property is the type of recipients for the content 1, the authorized recipients described in the policy being explicitly defined (e.g. by name, email), or implicitly defined by some properties or defined by some conditions (e.g. aged 18 and over, belonging to an enterprise).

Another example of specific property is the group recipient for the content 1, the possible recipients being defined by a predefined but modifiable group.

A second module 5 named EASDM (*Encryption*/*Association Strategy Determination Module)* takes the properties provided by the first module 4 PPAM in order to determine the encryption and association strategy.

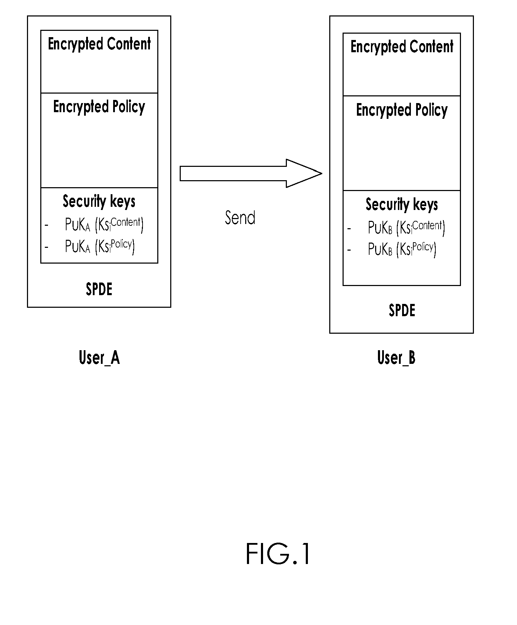

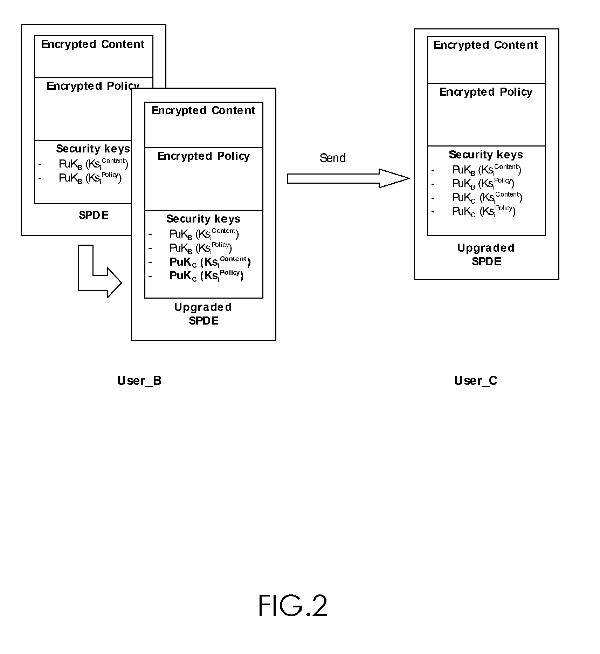

According to one example of encryption and association strategy represented on figure 1 and 2, the authorized recipients are named one by one. In this case, the content 1 is signed with the user A's private key PrK_{A} and encrypted with a symmetric key Ksᵢ^{Content} generated randomly for each message. Then, this secret key Ksᵢ^{Content} is encrypted separately using the public key of each authorized recipient PuK_{recipient} cited in the policy. The content policy is signed with the user A's private key PrK_{A} and encrypted with another symmetric key Ksᵢ^{Policy} generated randomly for each message. Then, this secret key Ksᵢ^{Policy} is encrypted separately using the public key of each authorized recipient PuK_{recipient} cited in the policy.

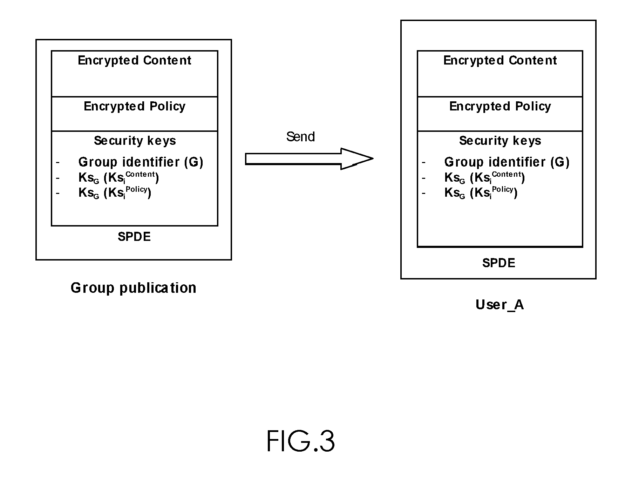

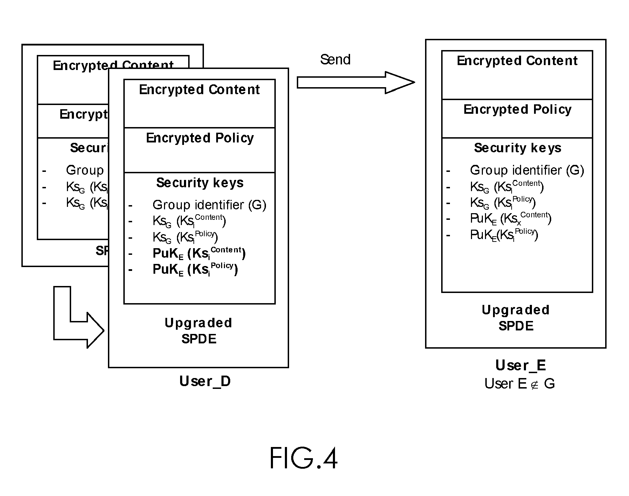

According to another example of encryption and association strategy represented in figure 3 and 4, the authorized recipients are defined by predefined group G (and/or implicit recipient description). The content 1 is optionally signed by the user private key and encrypted with a symmetric key generated randomly Ksᵢ^{Content}. But this key is encrypted using a symmetric group key Ks_{G} shared by all group members after initial group key generation and sharing. The same encryption mechanism is done for the policy using another randomly generated symmetric key Ksᵢ^{Policy}.

A third module 6 named ECPAM *(Encrypted Content and Policy Association Module)* build the Secure Personal Data Envelope (SPDE) 7.

Secure Personal Data Envelope SPDE 7 comprises privacy sensitive information entity that is incorporated or embedded in a generic template that defines the privacy related properties of that entity.

All required keys are provided by an external key management system 8 the user uses to store his keys and his group and contacts public keys.

The resulted SPDE 7 contains the following elements:
- the content 1 signed and encrypted with the symmetric key Ksᵢ^{Content} (generated randomly for this SPDE)
- the list of Ksᵢ^{Content} encrypted separately with all recipient public key, and/or the Ksᵢ^{Content} encrypted with KS_{G} if it is about a group recipient;
- the policy 2 optionally signed and encrypted with KSᵢ^{Policy} (generated randomly for this SPDE)
- the list of Ksᵢ^{Policy}encrypted separately with all recipients public key, and/or the Ksᵢ^{Policy} encrypted with Ks_{G} if it is about a group recipient
- some information characterizing the group (e.g. group id, group name), for the case of group recipient. The SPDE can optionally be extended to carry additional data (as header information)

The SPDE 7 is ready to be published to application environments (e.g. social network, mailing systems).

In the consuming mechanism for SPDE 7, a policy extraction module 10 extracts the privacy policy in order to be evaluated to know if the recipient is authorized to consume the content with regards the action 11 he requested. Thereby, the policy extraction module 10 extracts the encrypted key which served to encrypt the policy and tries to decrypt it with the recipient private key. If this operation succeeds, the policy can then be decrypted. Otherwise, the policy extraction module tries to decrypt the key by using a previously received group key.

Advantageously, each group key is associated with a group id (or group name), so the receiver of a SPDE 7 does not have to try every single group key.

Once extracted, the policy is evaluated by the policy evaluation module 12 and the policy decision point module 13, these two modules 12, 13 verifying if the privacy policy is satisfied with regards to the recipient identification and the content usage context like requested actions (e.g. read, transfer), or transfer destination (e.g. recipient id, his properties).

If the privacy policy is satisfied, the content can be extracted by the content extraction module 14. Note that optional obligations (e.g., log PDE access, notify PDE sender before giving access to PDE) can also be defined within the policy and must be executed if some actions on the received PDE are authorized and performed.

For the requested actions (like read, print), and if the policy evaluation is satisfied, the content can be extracted from the enhanced secure SPDE 7 and decrypted with the suitable decryption mechanism like the policy extraction process (depending on the recipients : individual or group). The user can consume the content but can be limited by the software (e.g. SPDE plug-in) depending on the policy.

If the requested action is to transfer the PDE to another user -and the privacy policy for this action is satisfied- the recipient can then transfer the SPDE 7 to the other specific recipient (called C). An additional key provisioning module 15 will add two elements to the enhanced secure SPDE 7:
- the symmetric key Ksᵢ^{Content} necessary for decrypting the content, encrypted with the C's public key PuK_{c}.
- the symmetric key Ksᵢ^{Policy} necessary for decrypting the policy, encrypted with the C's public key PuK_{c}.

Then, an upgraded SPDE 16 is resulted by this operation and is sent to the recipient C (see figure 2). This later can thereby receive the SPDE and consume it using his private key.

For the specific case of implicit or dynamic recipient expression (means every single member can not be identified when publishing a content and will be evaluated or known only afterwards), recipient expression such as *"any person older than 18 years", "any person requesting access from a specific place", "friends of friends",* which is a sub-case of group recipients, the SPDE will contain additional information about where to find the secret key Ks_{G} generated by the SPDE plug-in of the content owner/publisher for each implicit recipient expression.

When a member of the group G wants to transfer a SPDE to a recipient C outside of G, the SPDE plug-in will trigger to SPDE policy to evaluate if the user C is authorized or not to access to this SPDE. If the policy evaluation succeeds, that means that C is one of implicit recipient, then the SPDE will be extended with the necessary secret keys (i.e., PuK_{c} (Ksᵢ^{Content}), and PuK_{c} (Ksᵢ^{Policy})) for C to be able to access to this SPDE.

Using the invention, the user has high guarantee that the privacy policies will be respected when privacy sensitive data are propagated through different service and application. The invention ensures to application provider a strong enforcement of their privacy conformity policy which increases their customer trust to use their services and also in accordance with the conformity label/certificate they may advocate, if any.

The invention also increases the trust of the end-users regarding the privacy sensible data they give to communication tools and social network applications. This is a strong advantage notably for the new telecom infrastructure (e.g., cloud infrastructure) in order to improve the control and the security the sensible user information they transport.

The SPDE propagation mechanism based on a hybrid encryption mechanism combining symmetric and asymmetric keys allows to dynamically add new user asymmetric keys if a new recipient is authorized by the privacy policy to receive the content.

The invention is not limited to the use of user-to-user communication but could also be directly used within any data exchange context, like the network context (e.g. for access control of network nodes).

## Claims

1. A method for publishing data to authorized recipients of a communication network, the method comprising:
- selecting the content (1) to be published;
- selecting a privacy policy (2) for the content (1) to be published;
- optionally signing the content (1) with a user's private key PrK_{A}
- randomly generating a first symmetric key Ksᵢ^{Content} for the content (1)
- encrypting the content (1) with this first symmetric key Ksᵢ^{Content} and
- encrypting this first secret key with the recipient's key.
- optionally signing the privacy policy (2) with the user's private key PrK_{A}
- randomly generating a second symmetric key Ksᵢ^{Policy} for the privacy policy (2)
- encrypting the privacy policy (2) with this second symmetric key Ksᵢ^{Policy} and encrypting this second secret key with the recipient's key.

2. A method according to claim 1, wherein the authorized recipients are named one by one, the encryption of the first secret key Ksᵢ^{Content} and the second secret key Ksᵢ^{Policy} being made using the public key of the recipient.

3. A method according to claim 2, wherein the first secret key Ksᵢ^{Content} is encrypted using the public key of each authorized recipient PuK_{recipient} cited in the privacy policy (2).

4. A method according to claim 2 or claim 3, wherein the second secret key Ksᵢ^{Policy} is encrypted using the public key of each authorized recipient PuK_{recipient} cited in the privacy policy (2).

5. A method according to claim 1, wherein the authorized recipients are defined by predefined group G and/or implicit recipient description.

6. A method according to claim 5, wherein the first symmetric key Ksᵢ^{Content} is encrypted using a group symmetric key Ks_{G} shared by all group members after initial group key generation and sharing.

7. A method according to claim 5 or 6, wherein the second symmetric key Ksᵢ^{Policy} is encrypted using a group symmetric key Ks_{G} shared by all group members after initial group key generation and sharing.

8. A method according to claims 1 to 4, wherein a Secure Personal Data Envelope SPDE (7) is published, said SPDE comprising:
- the content (1) signed and encrypted with the symmetric key Ksᵢ^{Content}(generated randomly for this SPDE)
- the list of Ksᵢ^{Content} encrypted separately with all recipients public keys,
- the privacy policy (2) signed and encrypted with Ksᵢ^{Policy} (generated randomly for this SPDE)
- the list of Ksᵢ^{Policy} encrypted separately with all recipients public keys.

9. A method according to claims 1 and 5 to 7, wherein a Secure Personal Data Envelope SPDE (7) is published, said SPDE comprising:
- the content (1) signed with the user's private key and encrypted with the symmetric key Ksᵢ^{Content} (generated randomly for this SPDE)
- the Ksᵢ^{Content} encrypted with Ks_{G};
- the content privacy policy (2) signed with the user's private key and encrypted with Ksᵢ^{Policy} (generated randomly for this SPDE)
- the Ksᵢ^{Policy} encrypted with Ks_{G} if it is about a group recipient.

10. A method according to claims 8 or 9, comprising a consuming mechanism for SPDE 7 for a recipient requesting an action, said mechanism comprising extracting the content privacy policy (2) to know if the recipient is authorized to consume the content with regards the action he requested.

11. A method according to claim 10, comprising an extension mechanism for specific actions such as "forward" involving additional recipients, said mechanism comprising the SPDE (7) extended with the additional keys required for the additional recipients to be able to consume the content protected by the SPDE.

12. Computer program implemented on a processing unit of a computer, said program including code sections for performing the following instructions:
- selecting the content (1) to be published;
- selecting a content privacy policy (2) for the content (1) to be published;
- optionally signing the content (1) with the user's private key PrK_{A}
- encrypting the content (1) with a first symmetric key Ksᵢ^{Content} (generated randomly) and encrypting the first secret key with the public key of the recipient PuK_{Recipient}
- optionally signing the content privacy policy (2) with the user's private key PrK_{A}
- encrypting the content privacy policy (2) with a second symmetric key Ksᵢ^{Policy} (generated randomly) and encrypting the second secret key with the public key of the recipient PuK_{Recipient}.
